# FASCICULE DE BREVET EUROPEEN

(11) **EP 0 797 092 B1**
(45) Date de publication et mention de la délivrance du brevet: **08.10.2003**
(21) Numéro de dépôt: 97400596.9
(22) Date de dépôt: 18.03.1997
(51) Int. Cl.: G01N 21/90

(54) **Procédé et dispositif de détection de débris de verre**
Verfahren und Vorrichtung zum Detektieren von Glas-Splittern
Method and apparatus for detecting glass debris

(30) Priorité: 22.03.1996 FR 9603586
(43) Date de publication de la demande: 24.09.1997
(73) Titulaire: GEBO INDUSTRIES, 67116 Reichstett (FR)
(72) Inventeur: Magoni, Pascal, 67640 Fegersheim (FR); Engel, Thierry, 67300 Schiltigheim (FR)
(74) Mandataire: Rhein, Alain

(56) Documents cités:
- DE-U- 8 133 650
- FR-A- 2 607 589
- FR-A- 2 726 651
- US-A- 3 963 348
- US-A- 4 209 802
- US-A- 4 459 023
- US-A- 4 804 273

## Description

La présente invention se rapporte à un procédé et à un dispositif de détection de débris de verre, notamment dans des bouteilles de boisson.

Les qualités exceptionnelles du verre, notamment sa neutralité vis-à-vis des aliments, sa transparence, sa rigidité, son imperméabilité aux liquides et aux gaz ainsi que son prix de revient modéré en font un matériau de choix pour la réalisation de conditionnements employés par l'industrie alimentaire. Malheureusement, les conditionnements en verre et notamment les bouteilles présentent une faible résistance aux chocs qui sont susceptibles de briser la bouteille ou, ce qui est plus grave, d'en détacher des débris dont la présence dans la bouteille risque de gêner ou de blesser le consommateur.

Il est d'ores et déjà connu par le document US 4 209 802 un appareil et un procédé pour détecter des débris dans des bouteilles fermées, pleines. Plus particulièrement ces bouteilles sont amenées de manière unifilaire et par l'intermédiaire de moyens de convoyage appropriés au-devant d'un poste d'inspection tenant compte qu'à l'approche de ce dernier ces bouteilles sont inclinées d'environ 45° de manière à définir une portion ou zone inférieure de cette bouteille au niveau de laquelle sont à même d'être collectés les débris de verre. Au niveau du poste d'inspection proprement dit, une source lumineuse vient éclairer cette zone inférieure de la bouteille en direction de laquelle est orientée une caméra vidéo raccordée à un moniteur pour la production d'une image agrandie de ladite zone destinée à permettre à un opérateur, constatant la présence de débris de verre, de commander l'éjection de la bouteille concernée.

Il est encore connu par le document US-4.804.273 un procédé et un dispositif permettant de détecter la présence de particules dans un liquide à usage pharmaceutique, contenu dans des flacons, ampoules ou similaires.

Il s'agit, tout particulièrement, de mettre en mouvement ces particules dans le récipient que l'on vient éclairer par un rayon laser de sorte que la présence des particules est indirectement détectée par l'effet de leur mouvement sur la composante alternative d'une lumière réfléchie par lesdites particules. Aussi, un tel procédé est inapproprié à la détection de débris de verre.

Il est également connu par le document FR-2.607.589 un procédé et un dispositif d'analyse physique de la limpidité d'un liquide conditionné dans une enveloppe, en particulier une bouteille. Il est prévu, là encore, de soumettre cette dernière à un mouvement de rotation et à l'illuminer au moyen d'un faisceau de rayonnement électromagnétique présentant un spectre de rayonnement correspondant à une plage de semi-transparence du matériau constitutif de la bouteille et du liquide. Finalement, l'on enregistre le flux de rayonnement transmis par le liquide conditionné au cours de cette illumination pour déterminer le degré de limpidité par comparaison à une valeur de référence. Il est tout particulièrement utilisé, en tant que source lumineuse, un faisceau laser continu. Par conséquent, il s'agit d'un état de la technique sensiblement équivalent à celui décrit dans le document US-A-4.804.273.

C'est par conséquent un but de la présente invention d'offrir un dispositif et un procédé de détection de débris de verre éventuellement présents dans des conditionnements en verre, en vue de leur élimination.

C'est également un but de la présente invention d'offrir un dispositif et un procédé de détection de débris de verre, éventuellement présents dans un conditionnement en verre, dispositif et procédé présentant une probabilité faible ou, de préférence, négligeable, de ne pas détecter des débris de verre effectivement présents dans un conditionnement en verre, notamment dans une bouteille.

C'est aussi un but de la présente invention d'offrir un tel dispositif et un tel procédé présentant un faible taux de fausse alerte.

C'est également un but de la présente invention d'offrir un dispositif et un procédé particulièrement rapides permettant d'inspecter des bouteilles à cadences élevées.

C'est aussi un but de la présente invention d'offrir un dispositif susceptible de fonctionner dans un environnement industriel.

C'est également le but de la présente invention d'offrir un dispositif et un procédé susceptibles de fonctionner en présence d'éclairage intense, notamment en lumière blanche.

Ces buts sont atteints par un dispositif selon l'invention comportant une source de lumière quasi-monochromatique illuminant les conditionnements à inspecter et des moyens de détection photoélectriques détectant uniquement ladite lumière quasi-monochromatique provenant du conditionnement en cours d'inspection.

L'invention a pour objet un procédé de détection d'éventuels débris de verre susceptibles de se trouver à l'intérieur des conditionnements pleins en verre transparent, notamment des bouteilles, consistant, pour chaque conditionnement en verre à inspecter à :
a) illuminer au moins une zone du conditionnement à inspecter avec de la lumière visible quasi-monochromatique ayant une fréquence f ;
b) effectuer la détection photoélectrique de la lumière quasi-monochromatique de fréquence f provenant du conditionnement en cours d'inspection ;
c) déterminer, à l'aide d'une unité centrale et en fonction de la répartition des intensités lumineuses à la fréquence f dans divers angles solides en partant de la zone de mesure dans le conditionnement en verre , si ce dernier contient des débris de verre
sachant qu'antérieurement à l'étape a), il comporte une étape d) consistant à basculer le conditionnement d'une position verticale à une position horizontale avant de l'incliner d'un angle compris entre 20 et 60° par rapport à la verticale pour confiner les éventuels débris de verre dans la zone de mesure ou d'analyse d'un volume inférieur au volume interne dudit conditionnement.

L'invention a également pour objet un procédé caractérisé en ce qu'à l'étape d) on incline le conditionnement, notamment la bouteille, d'un angle compris entre 30 et 45°.

L'invention a également pour objet un procédé, caractérisé en ce que le conditionnement à inspecter ou la zone de mesure dudit conditionnement se trouve sur le trajet des rayons lumineux entre une source lumineuse et des moyens de détection photo-électriques.

L'invention a également pour objet un procédé caractérisé en ce que les conditionnements à inspecter sont des bouteilles, notamment des bouteilles de bières.

L'invention a également pour objet un procédé caractérisé en ce que les moyens de détection photoélectrique sont équipés d'un filtre à optique passe-bande étroit centré sur la fréquence f pour mesurer ou détecter uniquement la lumière quasi monochromatique à la fréquence f en présence de lumière visible ambiante.

L'invention a également pour objet un procédé, caractérisé en ce que les conditionnements à inspecter sont disposés sur un carrousel tournant, muni d'un poste fixe de mesure ou de détection des débris de verre dans des conditionnements successivement présentés devant ledit poste de mesure.

L'invention a également pour objet un procédé caractérisé en ce que l'on effectue la détection sur une ligne de conditionnement de produits alimentaires à la cadence de cette ligne et en ce que la détection de débris de verre est effectuée après le remplissage et avant la pose des étiquettes.

L'invention concerne encore un dispositif de détection de débris de verre dans des conditionnements pleins en verre transparent, notamment des bouteilles, comportant un poste de détection ou de mesure comprenant une source de lumière quasi-monochromatique à une fréquence f apte à illuminer une zone de confinement d'éventuels débris de verre et des moyens photoélectriques de détection de cette lumière à la fréquence f provenant de la zone éclairée par ladite source, caractérisé par le fait qu'il se présente sous forme d'un carrousel entraînant à rotation les conditionnements vers le poste de détection ou de mesure, ce carrousel comportant des moyens de positionnement prévus aptes à saisir lesdits conditionnements, à les basculer d'une position verticale dans une position horizontale, puis à les incliner d'un angle compris entre 20° et 60°, préférentiellement entre 30 et 45° par rapport à la verticale, puis à les positionner ainsi inclinés devant le poste de détection ou de mesure.

L'invention a également pour objet un dispositif caractérisé par le fait que les moyens de positionnement comportent chacun, une pince prévue apte à saisir un conditionnement, ainsi qu'un galet à même d'être guidé par une came sur la périphérie du carrousel, de manière à assurer le basculement et l'inclinaison desdits conditionnements, puis leur positionnement devant le poste de détection ou de mesure.

L'invention a également pour objet un dispositif, caractérisé par le fait qu'il comporte des rails de guidage pour le positionnement des conditionnements devant le poste de détection ou de mesure.

L'invention a également pour objet un dispositif caractérisé en ce que la source de lumière quasi-monochromatique comporte un laser.

L'invention a également pour objet un dispositif, caractérisé en ce que le laser est un laser hélium-néon ayant une longueur d'ondes de 543,5 nm.

L'invention a également pour objet un dispositif, caractérisé en ce que les moyens de détection photoélectrique comportent une caméra vidéo assurant l'acquisition d'une image formée sur un écran translucide éclairé par la lumière provenant des conditionnements à inspecter.

L'invention a également pour objet un dispositif, caractérisé en ce que les moyens de détection photoélectrique sont munis d'un filtre passe-bande étroit centré sur la fréquence f.

L'invention sera mieux comprise au moyen de la description ci-après et des figures annexées données comme des exemples non limitatifs et sur lesquels :
- la figure 1 est une vue en élévation d'un premier exemple faisant partie de l'état de la technique;
- la figure 2 est une vue en élévation d'un deuxième exemple faisant partie de l'état de la technique;
- la figure 3 est une vue en élévation d'un troisième exemple de réalisation du dispositif selon la présente invention ;
- la figure 4 est une vue en élévation de l'exemple préféré de réalisation du dispositif selon la présente invention.

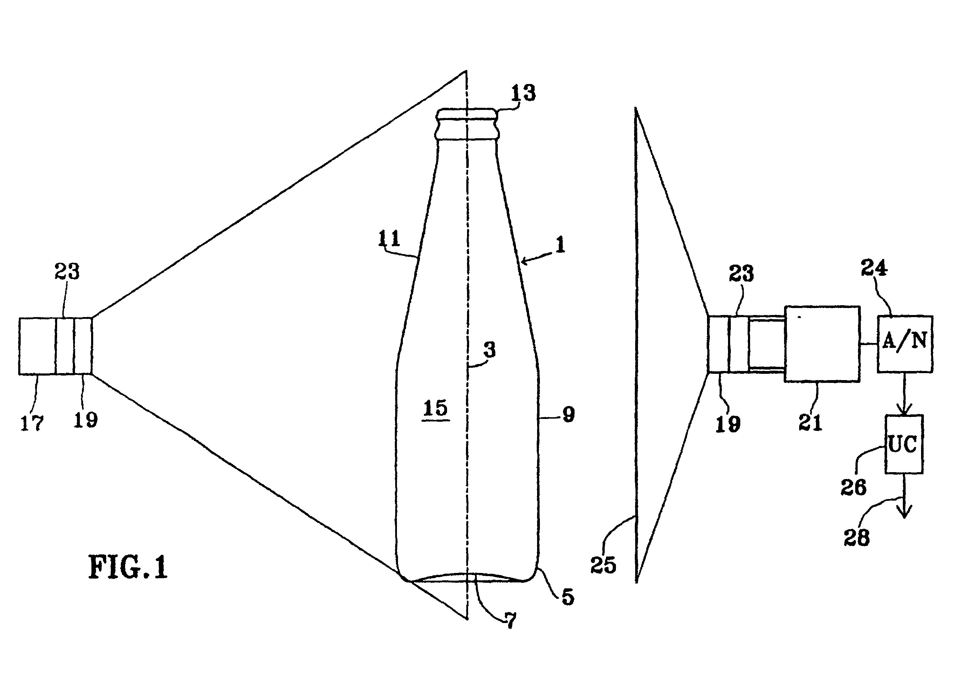

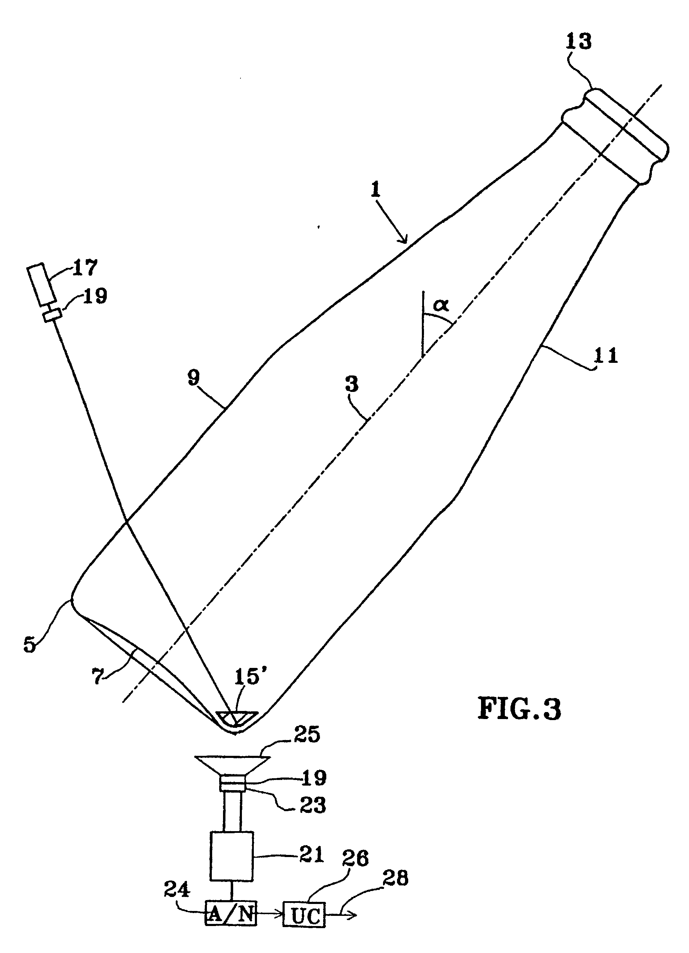

Sur les figures 1 à 4, on a utilisé les mêmes références pour désigner les mêmes éléments.

Le procédé et le dispositif selon la présente invention seront expliqués en référence à une bouteille 1 que l'on peut notamment voir sur les figures 1, 2, 3 et 4, étant bien entendu que la présente invention s'étend à tout conditionnement en verre transparent, notamment au conditionnement en verre mis en oeuvre par l'industrie alimentaire. Il est à noter que la détection de débris de verre se trouvant à l'intérieur d'une bouteille en verre est rendue particulièrement difficile par le fait que la détection doit s'effectuer à travers des parois qui sont constituées par le même matériau que celui que l'on essaye de détecter. Le problème est particulièrement difficile à résoudre dans le cas de bouteilles en verre de couleur, notamment verte ou ambre, remplis avec une boisson elle-même colorée.

Sur la figure 1, on peut voir une bouteille 1 de type 1 de type connu ayant un axe de symétrie 3 vertical lorsque la bouteille 1 repose sur un support par une base 5 appelée talon.

Le talon 5 est muni d'une protubérance 7 conique ou en forme de calotte sphérique, appelé piqué, dirigée vers l'intérieur de la bouteille. Du talon 5 part un corps 9 sensiblement cylindrique prolongé vers le haut par un col 11 tronconique qui se termine par une bague 13 de réception d'une capsule d'obturation. La bouteille 1 est habituellement réalisée en verre .... bière de couleur verte, d'autres types de bouteilles étant fréquemment réalisées en verre mi-blanc ou verre de couleur ambre.

Le contenu de la bouteille formant la zone de détection 15 est illuminé par une source de lumière quasi-monochromatique 17 émettant une lumière de fréquence f dont la longueur d'ondes est transmise par le verre des conditionnements, notamment des bouteilles à inspecter. Pour du verre blanc ou ambre, on peut par exemple mettre en oeuvre une lampe au sodium basse pression, avantageusement filtrée par un filtre passe-bande étroit 23 centré sur la raie d'émission double des lampes au sodium. Avantageusement, on met en oeuvre un filtre interférentiel.

Les moyens d'acquisition de données comportent un ou plusieurs détecteurs photoélectriques sensibles à la fréquence de la source 17 et disposés de manière à capter la lumière provenant de la bouteille 1. Dans l'exemple avantageux illustré, les moyens d'acquisition de données comportent une caméra vidéo 21 munie du filtre interférentiel 23 analogue au filtre 23 de la source 17 assurant l'acquisition d'une image formée sur un écran translucide 25 disposé à proximité de la bouteille 1, par exemple entre 0,5 et 10 cm de la bouteille 1. Dans l'exemple préféré de réalisation, l'écran 25 est opposé diamétralement par rapport à l'axe 3, à la source 17. Il est bien entendu que les dispositifs dépourvus d'écran translucide 25, par exemple avec aquisition de l'intensité lumineuse en divers points autour de la bouteille ou avec acquisition de l'image de la bouteille ne sortent pas du cadre de la présente invention.

Avantageusement, le laser 17 illumine toute la largeur de la bouteille par un faisceau dont la largeur est sensiblement égale à celle de la bouteille ou de préférence, par balayage avec déplacement relatif du faisceau laser par rapport à la bouteille, par exemple par déplacement de la bouteille devant le faisceau.

Avantageusement, la source 17 et la caméra vidéo 21 sont munies de filtres polarisants 19 en polarisations croisées. La caméra vidéo 21 est connectée par l'intermédiaire d'un convertisseur analogique/numérique 24 à une unité centrale 26. L'unité centrale 26 effectue le traitement d'images pour déterminer, d'après l'intensité et la position des taches lumineuses détectées sur l'écran 25 si la bouteille 1 en cours d'inspection contient ou non des débris de verre. Dans la variante de réalisation mettant ou oeuvre le balayage de la zone de mesure 15' par le faisceau laser, il est avantageux d'analyser par l'unité centrale 26 les variations de l'intensité lumineuse et/ou les déplacements des taches de lumière sur l'écran translucide 25 en fonction de la position relative du faisceau laser par rapport à la zone 15'. Lorsque des débris de verre sont détectés dans une bouteille 1, l'unité centrale 26 délivre un signal d'alarme 28 déclenchant l'élimination de la bouteille concernée. On peut par exemple utiliser comme unité centrale 26 un micro-ordinateur ou un calculateur spécialisé en vision artificielle et/ou en traitement d'images. L'unité centrale 26 est munie d'un logiciel de traitement d'images en temps réel qui détermine si la probabilité, pour que la bouteille 1 inspectée contienne des débris de verre, dépasse un seuil prédéterminé. Ce logiciel comporte avantageusement des modules réalisés sous forme de réseaux neuroneaux.

Pour un type de bouteilles donné, on procède à un étalonnage du logiciel par comparaison du signal correspondant à des bouteilles dépourvues de débris de verre par comparaison à diverses bouteilles comportant divers débris de verre que l'on veut détecter.

Les bouteilles ayant donné lieu à la détection de débris de verre sont éliminées en vue de leur destruction avec ou sans recyclage ou en vue d'une seconde inspection par un deuxième dispositif comportant avantageusement un réglage de seul de rejet différent de celui du premier dispositif. Le second dispositif peut travailler à une cadence relativement faible dans la mesure où il n'effectue que l'inspection des bouteilles rejetées par le premier dispositif. La mise en oeuvre de deux dispositifs permet d'obtenir à un très faible taux de fausse alerte tout en éliminant pratiquement toutes les bouteilles contenant des débris de verre y compris les débris de faible taille qui sont les plus difficiles à détecter.

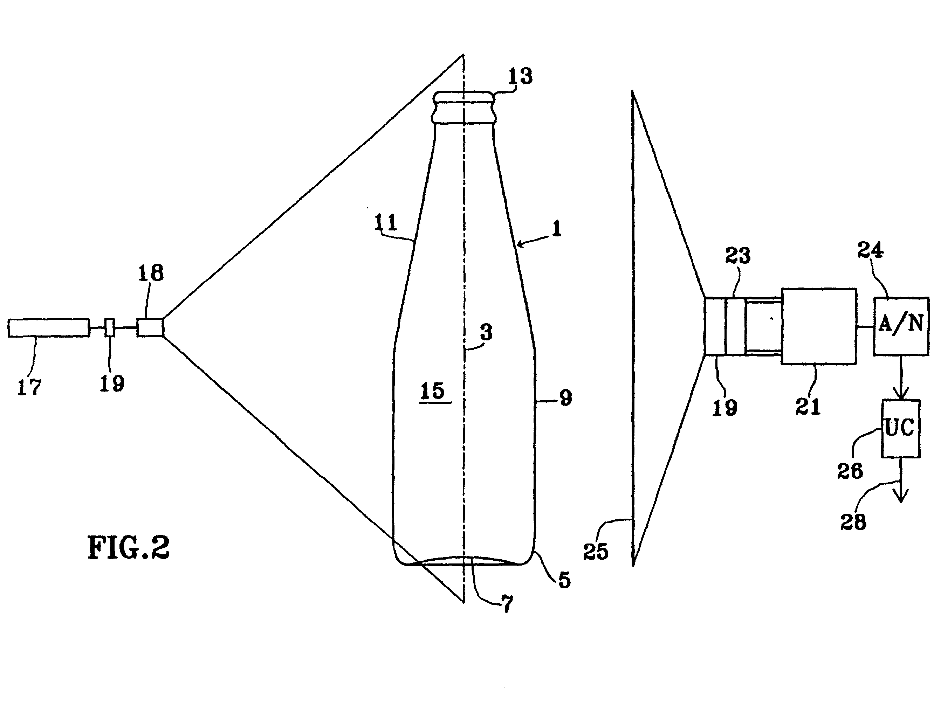

Sur la figure 2, on peut voir une variante de réalisation du dispositif de la figure 1 dans lequel la source 17 comporte un laser et un dispositif optique 18 permettant d'illuminer la zone 15 de la bouteille 1. On utilise avantageusement un laser hélium-néon émettant une lumière dont la longueur d'ondes est transmise par les verres des conditionnements, notamment des bouteilles inspectées. Par exemple avec du *verre bière* de couleur verte, on utilise une longueur d'ondes de 543,5 nm. Avec des conditionnements en verre blanc ou mi-blanc, on peut utiliser par exemple les rayonnements ayant une longueur d'ondes de 594 nm, 612 nm ou 632,8 nm.

Le laser 17 peut également être muni d'un filtre polariseur 19.

Il est précisé que ces modes de réalisation correspondant aux figures 1 et 2 et décrites ci-dessus ne sont pas couverts par les revendications, mais font partie de l'état de la technique et/ou sont utiles à la compréhension de l'invention.

Les acquisitions de données effectuées dans un faible volume permet d'augmenter le taux de détection de débris de verre effectivement présents dans une bouteille tout en diminuant le taux de fausse alerte correspondant à une prétendue détection de débris de verre dans une bouteille qui n'en contient point.

Ainsi, il est avantageux de confiner gravitationnellement d'éventuels débris de verre, s'il y en a, dans une zone de mesure d'analyse et/ou de détection 15' de faible volume se trouvant au fond de la bouteille 1. La réduction du volume de la zone 15' de mesure d'analyse et/ou de détection est minimisée en inclinant la bouteille 1 par rapport à la verticale d'un angle a par exemple égal à 39°. Avantageusement, l'angle a correspond à l'angle que forme la bissectrice de l'angle formé entre le piqué 7 et le corps 9 de la bouteille avec la verticale. Toutefois, il est bien entendu que l'on peut s'écarter de cet angle sans pour autant sortir du cadre de la présente invention. Dans le cas le plus favorable, on peut réduire le volume de la zone de mesure 15' à 0,22 % du volume interne de la bouteille 1. D'excellents résultats ont également été obtenus avec le volume de la zone de mesure égale notamment à 5 %, 3 % ou 1 % du volume de la bouteille.

Selon l'invention, pour s'assurer que tous les éventuels débris de verre retombent bien dans la zone 15', il est avantageux d'agiter et/ou de basculer la bouteille d'une position verticale à une position horizontale avant de l'incliner à 39° par rapport à la verticale.

Avantageusement, l'angle d'incidence du faisceau laser sur la bouteille est tel que le faisceau laser est tangent au piqué 7 ou au fond 1 de la bouteille.

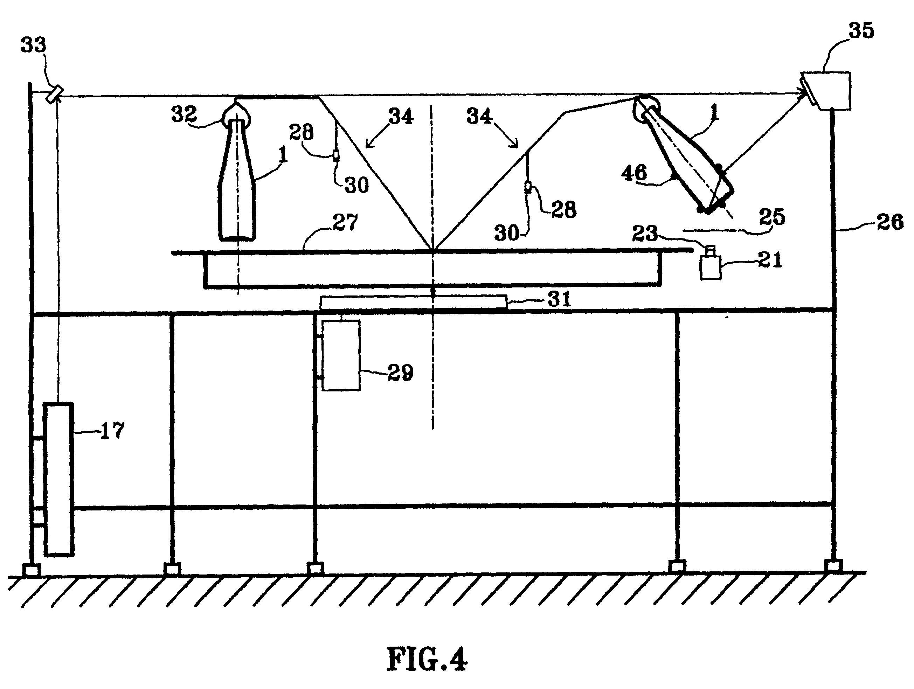

La mise en oeuvre d'un carroussel entraînant à rotation les bouteilles 1 vers le poste de détection ou de mesure permet d'améliorer la précision du guidage et par suite la fiabilité des résultats de mesure. Le dispositif de la figure 4 comporte un bâti portant le système d'illumination, un plateau 27 entraîné en rotation par un moteur 29, un dispositif de transmission 31 ainsi qu'un dispositif de mesure ou d'acquisition de données. Le système d'illumination comporte un laser 17 d'axe optique vertical, un premier miroir de renvoi 33 à angle droit du faisceau laser, un second miroir 35 de renvoi à 57° du faisceau laser. Le dispositif d'acquisition de données comporte un écran translucide 25 vers lequel est dirigé un détecteur photoélectrique, avantageusement une caméra de vision artificielle 21. Le détecteur photoélectrique, notamment la caméra 21, est connecté, par exemple par l'intermédiaire de convertisseurs analogiques numériques 24, à un calculateur 26.

Dans une variante avantageuse, le carrousel comporte des moyens 34 de positionnement, chacun comprenant une pince 32 saisissant la bague 13 d'une bouteille. Avantageusement, la pince 32 ou les moyens 34 de positionnement sont munis d'un galet 28 guidé par une came 30 sur la périphérie du carroussel, assurant ainsi l'inclinaison et l'agitation des bouteilles, puis le positionnement à 39° devant le poste de mesure.

Avantageusement, le positionnement à ce niveau est optimisé par la présence de rails de guidage 46 afin que le référencement de la position du faisceau laser soit assuré par rapport au pied de la bouteille.

On peut par exemple utiliser pour les pinces et leur mécanisme de guidage des moyens mécaniques mis en oeuvre dans les machines de lavage de bouteilles sur carrousel.

Le carrousel comporte, par exemple 120 pinces 32 avec une répartition angulaire régulière.

Avantageusement, le dispositif de détection de débris de verre dans des bouteilles est inséré dans une chaîne d'embouteillage de boissons, notamment de bière, après les postes de sous-tirage, de bouchage, de pasteurisation et avant le poste de pose d'étiquettes. Un tel dispositif travaille à la cadence de la chaîne d'embouteillage, par exemple égale à 60 000 bouteilles à l'heure.

La présente invention trouve son application principalement dans l'industrie agroalimentaire, notamment dans les brasseries.

## Revendications

1. Procédé de détection d'éventuels débris de verre susceptibles de se trouver à l'intérieur des conditionnements pleins en verre transparent, notamment des bouteilles (1), consistant :
a) à illuminer au moins une zone (15, 15') du conditionnement (1) à inspecter avec de la lumière visible quasi-monochromatique ayant une fréquence f ;
b) à effectuer la détection photoélectrique de la lumière quasi-monochromatique de fréquence f provenant du conditionnement (1) en cours d'inspection ;
c) et à déterminer, à l'aide d'une unité centrale (26) et en fonction de la répartition des intensités lumineuses à la fréquence f dans divers angles solides définis à partir de la zone de mesure dans le conditionnement en verre (1), si ce dernier contient des débris de verre.
**caractérisé en ce qu'**antérieurement à l'étape a), il comporte une étape d) consistant à basculer le conditionnement d'une position verticale dans une position horizontale avant de l'incliner d'un angle compris entre 20 et 60° par rapport à la verticale pour confiner les éventuels débris de verre dans la zone (15, 15') de mesure ou d'analyse d'un volume inférieur au volume interne dudit conditionnement (1).

2. Procédé selon la revendication 1, **caractérisé en ce que** la zone de mesure (15, 15') du conditionnement à inspecter se trouve sur le trajet des rayons lumineux entre une source lumineuse (17) et des moyens de détection photoélectriques (21).

3. Procédé selon l'une quelconque des revendications 1 à 2, **caractérisé en ce qu'**à l'étape d) on incline le conditionnement (1), notamment la bouteille, d'un angle compris entre 30 et 45°.

4. Procédé selon l'une quelconque des revendications précédentes, **caractérisé en ce que** les conditionnements à inspecter sont des bouteilles, notamment des bouteilles de bière.

5. Procédé selon la revendication 4, **caractérisé en ce qu'**on effectue la détection photoélectrique de l'intensité de la lumière à la fréquence f provenant de la zone (15') située dans la partie inférieure du talon (5) de la bouteille (1) en cours d'inspection.

6. Procédé selon l'une quelconque des revendications précédentes, **caractérisé en ce que** les moyens de détection photoélectrique (21) sont équipés d'un filtre optique passe-bande étroit (23) centré sur la fréquence f pour mesurer ou détecter uniquement la lumière quasi-monochromatique à la fréquence f en présence de lumière visible ambiante.

7. Procédé selon l'une quelconque des revendications précédentes, **caractérisé en ce que** les conditionnements à inspecter (1) sont disposés sur un carrousel (27) tournant, muni d'un poste fixe de mesure ou de détection des débris de verre dans des conditionnements successivement présentés devant ledit poste de mesure.

8. Procédé selon l'une quelconque des revendications précédentes, **caractérisé en ce que** l'on effectue la détection sur une ligne de conditionnement de produits alimentaires, à la cadence de cette ligne et **en ce que** la détection de débris de verre est effectuée après le remplissage et avant la pose des étiquettes.

9. Dispositif de détection de débris de verre dans des conditionnements pleins en verre transparent (1), notamment des bouteilles, comportant un poste de détection ou de mesure comprenant une source de lumière quasi-monochromatique (17) à une fréquence f apte à illuminer une zone (15, 15') de confinement d'éventuels débris de verre d'un volume inférieur au volume interne dudit conditionnement et des moyens photoélectriques (21) de détection de cette lumière à la fréquence f provenant de la zone (15, 15') éclairée par ladite source (17), **caractérisé par le fait qu'**il se présente sous forme d'un carrousel (27) entraînant en rotation les conditionnements (1) vers le poste de détection ou de mesure, ce carrousel (27) comportant des moyens de positionnement (34) prévus aptes à saisir lesdits conditionnements (1), à les basculer d'une position verticale dans une position horizontale, puis à les incliner d'un angle compris entre 20 et 60°, préférentiellement entre 30 et 45° par rapport à la verticale, puis à les positionner ainsi inclinés devant le poste de détection ou de mesure.

10. Dispositif selon la revendication 9, **caractérisé par le fait que** les moyens (34) de positionnement comportent, chacun, une pince (32) prévue apte à saisir un conditionnement (1), ainsi qu'un galet (28) à même d'être guidé par une came (30) sur la périphérie du carrousel (27) de manière à assurer le basculement et l'inclinaison desdits conditionnements (1), puis leur positionnement devant le poste de détection ou de mesure.

11. Dispositif selon la revendication 9 ou 10, **caractérisé par le fait qu'**il comporte des rails de guidage (46) pour le positionnement des conditionnements (1) devant le poste de détection ou de mesure.

12. Dispositif selon l'une quelconque des revendications précédentes 9 à 11, **caractérisé en ce que** la source de lumière quasi-monochromatique (17) comporte un laser.

13. Dispositif selon la revendication 12, **caractérisé en ce que** le laser (17) est un laser hélium-néon ayant une longueur d'ondes de 543,5 nm.

14. Dispositif selon l'une quelconque des revendications 9 à 13, **caractérisé en ce que** les moyens de détection photoélectrique (21) comportent une caméra vidéo assurant l'acquisition d'une image formée sur un écran translucide (25) éclairé par la lumière provenant des conditionnements (1) à inspecter.

15. Dispositif selon l'une quelconque des revendications 9 à 14, **caractérisé en ce que** les moyens de détection photoélectrique (21) sont munis d'un filtre passe-bande étroit (23) centré sur la fréquence f.

## Patentansprüche

1. Verfahren zum Detektieren möglicher Glassplitter, die sich innerhalb voller Verpackungen aus durchsichtigem Glas, insbesondere Flaschen (1), befinden können, darin bestehend, daß:
wenigstens eine Zone (15, 15') der zu überprüfenden Verpackung (1) mit sichtbarem, nahe-monochromatischem Licht, das eine Frequenz f hat, beleuchtet wird ;
b) das photoelektrische Detektieren des nahe-monochromatischen Lichts mit einer Frequenz f, das aus der Verpackung (1) herstammt, im Laufe der Überprüfung durchgeführt wird ;
c) und mittels einer zentralen Einheit (26) und in Abhängigkeit von der Verteilung der Lichtintensitäten bei der Frequenz f nach unterschiedlichen räumlichen Winkeln, die ausgehend von der Meßzone in der Glasverpackung (1) gebildet werden, bestimmt wird, ob diese letztere Glassplitter enthält,
**dadurch gekennzeichnet, daß** es vor dem Schitt a) einen Schritt d) umfaßt, der darin besteht, daß die Verpackung von einer vertikalen Position in eine horizontale Position gekippt wird, bevor sie in einem Winkel schräg gestellt wird, der zwischen 20 und 60° hinsichtlich der Senkrechte liegt, um die möglichen Glassplitter in der Zone (15, 15') zum Messen oder zur Analyse eines Volumens, welches kleiner ist als das innere Volumen der Verpackung (1), einzusperren.

2. Verfahren nach Anspruch 1, **dadurch gekennzeichnet, daß** die Meßzone (15, 15') der zu überprüfenden Verpackung sich auf der Strecke der Lichtstrahlen zwischen einer Lichtquelle (17) und Mitteln zum photoelektrischen Detektieren (21) befindet.

3. Verfahren nach irgendeinem der Ansprüche 1 bis 2, **dadurch gekennzeichnet, daß** bei dem Schritt d) die Verpackung (1), insbesondere die Flasche, in einem Winkel schräg gestellt wird, der zwischen 30 und 45° liegt.

4. Verfahren nach irgendeinem der vorgehenden Ansprüche, **dadurch gekennzeichnet, daß** die zu überprüfenden Verpackungen Flaschen, insbesondere Bierflaschen, sind.

5. Verfahren nach Anspruch 4, **dadurch gekennzeichnet, daß** ein photoelektrisches Detektieren der Lichtintensität mit der Frequenz f, die aus der Zone (15') herstammt, welche sich im unteren Teil der Hacke (5) der Flasche (1) befindet, im Laufe der Überprüfung durchgeführt wird.

6. Verfahren nach irgendeinem der vorgehenden Ansprüche, **dadurch gekennzeichnet, daß** die Mittel zum photoelektrischen Detektieren (21) mit einem engen optischen Bandpaß-Filter (23) ausgestattet sind, welcher auf die Frequenz f ausgerichtet ist, um nur das nahe-monochromatische Licht mit der Frequenz f in Anwesenheit von sichtbarem Raumlicht zu messen oder zu detektieren.

7. Verfahren nach irgendeinem der vorgehenden Ansprüche, **dadurch gekennzeichnet, daß** die zu überprüfenden Verpackungen (1) auf einem Drehkarussell (27) angeordnet sind, das mit einem festen Posten zum Messen oder Detektieren von Glassplittern in den Verpackungen ausgestattet ist, die aufeinanderfolgend vor dem besagten Meßposten hintreten.

8. Verfahren nach irgendeinem der vorgehenden Ansprüche, **dadurch gekennzeichnet, daß** das Detektieren auf der Linie zur Verpackung von Nahrungsmitteln im Gleichschritt mit dieser Linie erfolgt, und daß das Detektieren von Glassplittern nach dem Abfüllen und vor der Verlegung der Etiketten durchgeführt wird.

9. Vorrichtung zum Detektieren von Glassplittern in vollen Verpackungen (1) aus durchsichtigem Glas, insbesondere in Flaschen, umfassend einen Posten zum Detektieren oder zum Messen, der eine Quelle von nahe-monochromatischem Licht (17) mit einer Frequenz f umfaßt, fähig, eine Zone (15, 15') zum Einsperren möglicher Glassplitter in einem Volumen, das kleiner ist als das innere Volumen der Verpackung, zu beleuchten, sowie umfassend photoelektrische Mittel (21) zum Detektieren dieses Lichtes mit der Frequenz f, das aus der Zone (15, 15') herstammt, die durch die besagte Quelle (17) beleuchtet wird, **dadurch gekennzeichnet, daß** sie sich in der Form eines Karussells (27) darstellt, das die Verpackungen (1) in Richtung auf den Posten zum Detektieren oder zum Messen in Drehung antreibt, wobei dieses Karussell (27) Mittel zum Positionieren (34) umfaßt, die geeignet vorgesehen sind, die besagten Verpackungen (1) zu greifen, sie von einer vertikalen Position in eine horizontale Position zu kippen, diese dann in einem Winkel, der zwischen 20 und 60°, vorzugsweise zwischen 30 und 45° hinsichtlich der Senkrechte liegt, schräg zu stellen, sie dann so schräg vor den Posten zum Detektieren oder zum Messen zu positionieren.

10. Vorrichtung nach Anspruch 9, **dadurch gekennzeichnet, daß** die Mittel (34) zum Positionieren jeweils eine Zange (32), fähig vorgesehen, eine Verpackung (1) zu greifen, sowie eine Rolle (29), geeignet, durch einen Nocken (30) auf dem Umkreis des Karussells (27) gelenkt zu werden, um das Kippen und das Schrägstellen der Verpackungen (1) und anschließend ihr Positionieren vor dem Posten zum Detektieren oder zum Messen zu sichern, umfassen.

11. Vorrichtung nach Anspruch 9 oder 10, **dadurch gekennzeichnet, daß** sie Führungsschienen (46) für das Positionieren der Verpackungen (1) vor dem Posten zum Detektieren oder zum Messen umfaßt.

12. Vorrichtung nach irgendeinem der vorgehenden Ansprüche 9 bis 11, **dadurch gekennzeichnet, daß** die Quelle (17) nahe-monochromatischen Lichtes einen Laser umfaßt.

13. Vorrichtung nach Anspruch 12, **dadurch gekennzeichnet, daß** der Laser (17) ein Helium- Neon-Laser ist, der eine Wellenlänge von 543,.5 nm hat.

14. Vorrichtung nach irgendeinem der Ansprüche 9 bis 13, **dadurch gekennzeichnet, daß** die Mittel zum photoelektrischen Detektieren (21) eine Videokamera umfassen, die das Erhalten eines Bildes sichert, das auf einem lichtdurchlässigen Bildschirm (25) gebildet ist, der durch das Licht beleuchtet ist, das aus den zu überprüfenden Verpackungen (1) herstammt.

15. Vorrichtung nach irgendeinem der vorgehenden Ansprüche 9 bis 14, **dadurch gekennzeichnet, daß** die Mittel zum photoelektrischen Detektieren (21) mit einem auf die Frequenz f ausgerichteten engen Bandpaß-Filter (23) ausgestattet sind.

## Claims

1. Method for detecting eventual glass debris likely to be present inside full packages made of transparent glass, namely bottles (1), consisting in :
a) illuminating at least one area (15, 15') of the package (1) to be inspected with visible nearly monochromatic light having a frequency f;
b) performing the photoelectric detection of the nearly monochromatic light having a frequency f proceeding from the package (1) during the inspection ;
c) and determining, by means of a central unit (26) and according to the distribution of the light intensities at the frequency f in various determined solid angles from the measuring area in the glass package (1), whether the latter contains glass debris,
**characterised in that** prior to step a) it includes a step d) consisting in tilting the package from a vertical position into a horizontal position, before inclining it according to an angle between 20 and 60° with respect to the vertical line, in order to confine the eventual glass debris in the area (15, 15') of measuring or analysis the volume of which is smaller than the inner volume of said package (1).

2. Method according to claim 1, **characterised in that** the measuring area (15, 15') of the package to be inspected is located on the pathway of the light rays between a light source (17) and photoelectric detecting means (21).

3. Method according to any of claims 1 to 2, **characterised in that** in step d) the package (1), namely the bottle, is inclined according to an angle between 30 and 45°.

4. Method according to any of the preceding claims, **characterised in that** the packages to be inspected are bottles, namely bottles of beer.

5. Method according to claim 4, **characterised in that** the photoelectric detection of the light intensity at the frequency f proceeding from the area (15') located in the lower portion of the heel (5) of the bottle (1) is carried out during the inspection.

6. Method according to any of the preceding claims, **characterised in that** the photoelectric detecting means (21) are provided with a narrow optical band-pass filter (23) centred on the frequency f, in order to measure or detect only the nearly monochromatic light at the frequency f in the presence of ambient visible light..

7. Method according to any of the preceding claims, **characterised in that** the packages to be inspected (1) are arranged on a rotating turn-table (27) provided with a fixed stand for measuring or detecting glass debris in packages that are successively brought in front of said measuring stand.

8. Method according to any of the preceding claims, **characterised in that** the detection is carried out on a foodstuff conditioning line, at the rhythm of this line and **in that** the detection of glass debris is carried out after filling and before applying the labels.

9. Device for detecting glass debris in full packages made of transparent glass (1), namely bottles, including a detection or measuring stand including a nearly monochromatic light source (17) at a frequency f capable of illuminating an area (15, 15') confining eventual glass debris the volume of which is smaller than the inner volume of said package and photoelectric means (21) for detecting this light at the frequency f proceeding from the area (15, 15') illuminated by said source (17), **characterised in that** it is in the form of a turn-table (27) driving the packages (1) rotationally towards the detection or the measuring stand, this turn-table (27) including positioning means (34) designed capable of seizing said packages (1), of tilting them from a vertical position into a horizontal position, then of inclining them according to an angle between 20 and 60°, preferably between 30 and 45°, with respect to the vertical line, then of positioning them thus inclined in front of the detection or the measuring stand.

10. Device according to claim 9, **characterised in that** the positioning means (34) each include a gripper (32) designed capable of seizing a package (1), as well as a roller (28) capable of being guided by a cam (30) at the periphery of the turn-table (27), so as to ensure the tilting and the inclination of said packages (1), then their positioning before the detection or measuring stand.

11. Device according to claim 9 or 10, **characterised in that** it includes guiding rails (46) for positioning the packages (1) in front of the detection or the measuring stand.

12. Device according to any of claims 9 to 11, **characterised in that** the nearly monochromatic light source (17) includes a laser.

13. Device according to claim 12, **characterised in that** the laser (17) is a helium-neon laser having a wavelength of 543.5 nm.

14. Device according to any of claims 9 to 13, **characterised in that** the photoelectric detecting means (21) include a video-camera ensuring the acquisition of an image formed on a translucent screen (25) illuminated by the light proceeding from the packages (1) to be inspected.

15. Device according to any of claims 9 to 14, **characterised in that** the photoelectric detecting means (21) are provided with a narrow optical band-pass filter (23) centred on the frequency f.
